# EUROPEAN PATENT SPECIFICATION

(11) **EP 2 920 450 B1**
(45) Date of publication and mention of the grant of the patent: **14.11.2018**
(21) Application number: 12780095.1
(22) Date of filing: 19.10.2012
(51) Int. Cl.: F02M 26/00, F02M 21/02, F02M 21/04

(54) **GAS MIXER FOR INTERNAL COMBUSTION ENGINE**
GASMISCHER FÜR EINEN VERBRENNUNGSMOTOR
MÉLANGEUR DE GAZ POUR MOTEUR À COMBUSTION INTERNE

(43) Date of publication of application: 23.09.2015
(73) Proprietor: Caterpillar Energy Solutions GmbH, 68167 Mannheim (DE)
(72) Inventor: REITZ, Harald, 68169 Mannheim (DE)
(74) Representative: BRP Renaud & Partner mbB Rechtsanwälte Patentanwälte Steuerberater
(86) International application number: PCT/EP2012/004388
(87) International publication number: WO 2014/060006

(56) References cited:
- FR-A1- 2 879 667
- US-A- 4 991 561
- US-A1- 2005 161 028
- US-A1- 2011 226 218

## Description

### Technical Field

The present disclosure generally refers to gas mixers for internal combustion engines, and more particularly to gas mixers for gaseous fuel internal combustion engines for mixing gaseous fuel and air.

### Background

Gaseous fuel internal combustion engines (also referred to as gas engines) are internal combustion engines running on gaseous fuel such as propane, natural gas, landfill gas, coal gas, and biogas.

Gas mixers are fluidly connected to a combustion unit of the gaseous fuel internal combustion engine to supply a mixture of gaseous fuel and air for firing. Gas mixers are used for mixing gaseous fuel and air having a desired air fuel ratio (AFR) such that the gaseous fuel internal combustion engine is operated in a desired operating range.

For example, DE 41 37 573 A1 discloses a venturi mixer to mix gas and air in combustion engines. The venturi mixer may have a central pipe with a venturi shaped profile. Gaseous fuel may enter the central pipe through a circumferential slot close to the venturi constriction. A cylindrically symmetric displacement body may be repositioned axially and may have a conical cross-section. Axial displacement of the displacement body may result in an adjustment of an air flow and/or a gaseous fuel flow within a predetermined range of possible AFRs.

To facilitate operation of gaseous fuel internal combustion engines with different gaseous fuel types having unequal calorific values, gas mixers have to provide various AFRs. For instance, a gaseous fuel internal combustion engine which runs on propane having a high calorific value of 93 MJ/m³ under standard reference conditions may be supplied with air fuel mixture having an AFR being lower than an AFR of an air fuel mixture supplied to a gaseous fuel internal combustion engine which runs on lean gas having a calorific value below 8.5 MJ/m³ under standard reference conditions.

When changing operation of gaseous fuel internal combustion engines between gaseous fuel types having different calorific values, depending on the difference between said calorific values, a displacement body within the gas mixer may have to be changed if the desired AFR exceeds the predetermined range of possible AFRs.

The present disclosure is directed, at least in part, to improving or overcoming one or more aspects of prior systems.

### Summary of the Disclosure

According to an aspect of the present disclosure, a gas mixer for a gaseous fuel internal combustion engine for mixing gaseous fuel and air may comprise a guiding channel extending along a central longitudinal axis between an inlet for air inlet and an outlet for air fuel mixture, the guiding channel comprising an inner channel wall being n-fold rational symmetric around the central longitudinal axis, except for the presence of the gaseous fuel supply opening. The gas mixer may further comprise a displacement body comprising a gaseous fuel inlet and gaseous fuel outlets and arranged within the guiding channel, the displacement body being n-fold rotational symmetric and rotationally displaceable around the central longitudinal axis, except for the presence of the gaseous fuel inlet. n is an integer greater than 1. The displacement body and the inner channel wall define an air passage therebetween, the air passage having a cross section area in a plane perpendicular to the central longitudinal axis, and a rotational displacement of the displacement body varies the cross section area of the air passage.

According to another aspect of the present disclosure, a gaseous fuel internal combustion engine may comprise an air inlet for supplying intake air; a fuel source for supplying gaseous fuel, and a gas mixer as exemplary disclosed herein. The gas mixer may be fluidly connected to the air inlet and the fuel source, and may be configured to provide a mixture of gaseous fuel and air having a predetermined air fuel ratio.

Other features and aspects of this disclosure will be apparent from the following description and the accompanying drawings.

### Brief Description of the Drawings

Fig. 1 shows an schematic diagram of an exemplary disclosed gaseous fuel internal combustion engine;
Fig. 2 is a side view of an exemplary disclosed gas mixer of the gaseous fuel internal combustion engine shown in Fig. 1;
Fig. 3 is a front view of an exemplary disclosed gas mixer shown in Fig. 2;
Fig. 4 is a sectional view of an exemplary disclosed housing shown in Fig. 2;
Fig. 5 is another sectional view of an exemplary disclosed housing shown in Fig. 2;
Fig. 6 is an isometric view of an exemplary disclosed displacement body shown in Fig. 2;
Fig. 7 is a front view of an exemplary disclosed displacement body shown in Fig. 2;
Fig. 8 is a sectional view of an exemplary disclosed displacement body shown in Fig. 2;
Fig. 9 is another sectional view of an exemplary disclosed displacement body shown in Fig. 2;
Fig. 10 is a sectional view of an exemplary disclosed gas mixer shown in Fig. 2;
Fig. 11 is another sectional view of an exemplary disclosed gas mixer shown in Fig. 2;
Fig. 12 is a side view of another exemplary disclosed gas mixer shown in Fig. 1; and
Fig. 13 is a co-ordinate system illustrating an exemplary disclosed operation of gas mixer shown in Fig. 1.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that a gas mixer including a cylindrically asymmetric inner channel wall of a guiding channel and a cylindrically asymmetric displacement body arranged in the guiding channel may facilitate adjustment of air flow and gaseous fuel flow over a wide range to adjust an AFR over a wide range. That is, the same displacement body may be used for numerous gaseous fuel types having different specific calorific values and requiring the gaseous fuel internal combustion engine to operate with different AFRs.

The present disclosure may be further based in part on the realization that a gas mixer including a cylindrically asymmetric inner channel wall of a guiding channel and a cylindrically asymmetric displacement body arranged in the guiding channel may facilitate a synchronous adjustment of air flow and gaseous fuel flow by utilization of a sole adjusting unit. Furthermore, when using a sole adjusting unit, a displacement of the displacement body causes a direct adjustment of both air flow and gaseous fuel flow by utilization of a sole displaceable member, namely the displacement body.

The present disclosure may be also based on the realization that a gas mixer including a cylindrically asymmetric inner channel wall of a guiding channel and a cylindrically asymmetric displacement body arranged in the guiding channel may facilitate adjustment of a cross section area of an air passage during operation of a gaseous fuel internal combustion engine to minimize a pressure drop across the air passage.

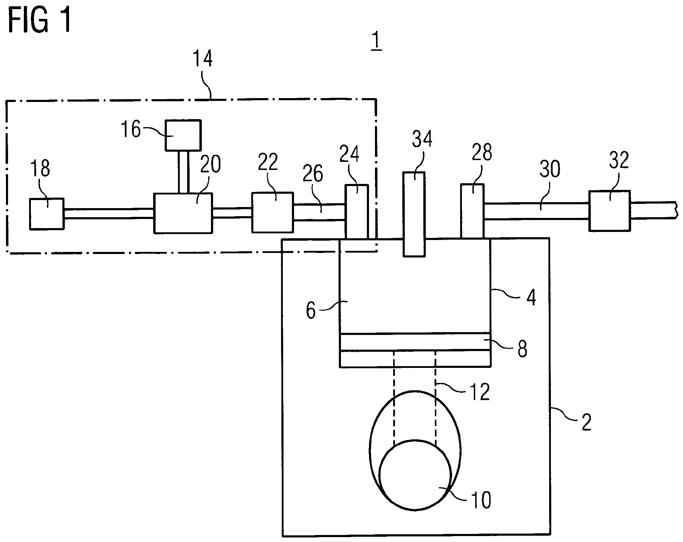

Referring now to the drawings, an exemplary embodiment of a gaseous fuel internal combustion engine 1 is illustrated in Fig. 1. Gaseous fuel internal combustion engine 1 may include features not shown, such as fuel systems, air systems, cooling systems, peripheries, drivetrain components, etc. For the purposes of the present disclosure, gaseous fuel internal combustion engine 1 is considered as a four-stroke gaseous fuel internal combustion engine. One skilled in the art will recognize, however, that gaseous fuel internal combustion engine 1 may be any type of engine (e.g., turbine, dual fuel, gaseous fuel, etc.) that would utilize a gas mixer. Furthermore, gaseous fuel internal combustion engine 1 may be of any size, with any number of cylinders, and in any configuration (e.g., "V," in-line, radial, etc.). Gaseous fuel internal combustion engine 1 may be used to power any machine or other device, including locomotive applications, on-highway trucks or vehicles, off-highway trucks or machines, earth moving equipment, generators, aerospace applications, marine applications, offshore applications, pumps, stationary equipment, or other engine powered applications.

Referring to Fig. 1, gaseous fuel internal combustion engine 1 is suited to essentially any application wherein an internal combustion power source is desired, and is particularly well suited to applications wherein it is desirable to limit emissions of certain pollutants, such as NOₓ compounds.

Gaseous fuel internal combustion engine 1 comprises an engine block 2, at least one cylinder 4 providing at least one combustion chamber 6 for combusting fuel, a piston 8, and a crank-shaft 10 connected to the piston 8 via a piston rod 12. Piston 8 is configured to reciprocate within the cylinder 4.

Gaseous fuel internal combustion engine 1 further comprises an air - fuel supply system 14 comprising a fuel source 16, an air inlet 18, a gas mixer 20, an intake manifold 22, an intake valve 24, and an intake pathway 26. The intake valve 24 is fluidly connected to combustion chamber 6. Intake valve 24 is configured to enable injection of compressed charge air and/or a mixture of compressed charge air and gaseous fuel into combustion chamber 6. After combusting the gas mixture, the exhaust gas is released out of the combustion chamber 6 via an outlet valve 28 into an exhaust gas outlet pathway 30, which may fluidly connect to an associated exhaust gas system 32 for treating the exhaust gas, for example, a catalyst reducing pollutant emissions. Outlet valve 28 is also fluidly connected to combustion chamber 6.

Gaseous fuel internal combustion engine 1 may also be a direct or port injection engine, or may include a pre-combustion chamber. Gaseous fuel internal combustion engine 1 may further include an exhaust gas recirculation system that may be operable to recirculate exhaust gas.

Those skilled in the art will appreciate that the compression ratio of gaseous fuel internal combustion engine 1 is insufficient to cause compression ignition of gaseous fuel in combustion chamber 6. Instead, each cylinder 4 of gaseous fuel internal combustion engine 1 is equipped with a spark plug 34.

A gas mixer 20 is provided and preferably disposed upstream intake manifold 22 that supplies a combustion mixture to engine block 2 and associated cylinder 4. In particular, gas mixer 20 is configured to provide a mixture of gaseous fuel and air having a predetermined AFR. Gas mixer 20 may communicate with an electronic control module via a communication line, which in turn provides electronic signals to gas mixer 20 to control, for example, the AFR. The electronic control module may be further configured to control the overall operation of the gaseous fuel internal combustion engine 1. To control operation of gaseous fuel internal combustion engine 1, the electronic control module may be further connected to various sensors to measure parameters such as combustion mixture pressure/temperature, combustion peak pressure, exhaust gas temperature/pressure sensors, and lambda.

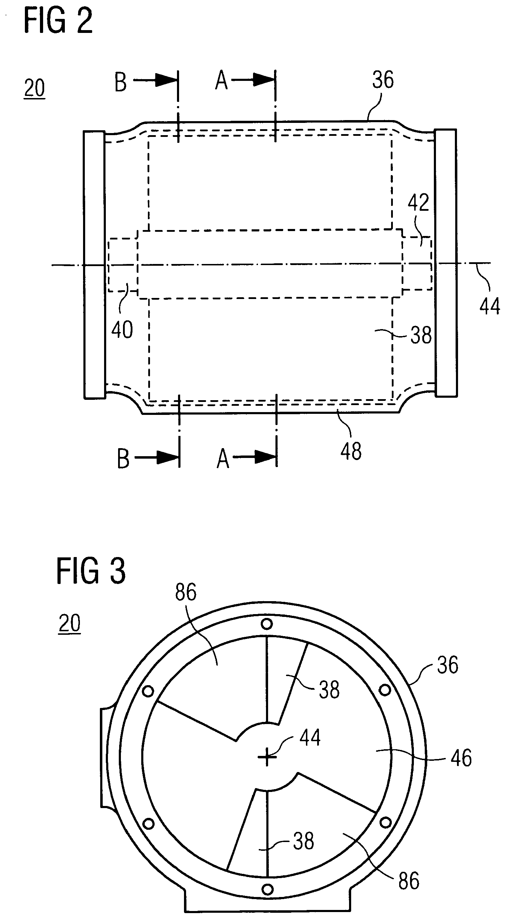

Referring now to Fig. 2, an exemplary gas mixer 20 as shown in Fig. 1 is described in greater detail.

Gas mixer 20 comprises a housing 36, a displacement body 38, and a guiding channel 48.

Displacement body 38 is arranged within housing 36 in guiding channel 48 as indicated by dashed lines in Fig. 2. Displacement body 38 is rotationally displaceable around a central longitudinal axis 44. As will be described in greater detail later on, displacement body 38 is cylindrically asymmetric around central longitudinal axis 44.

Referring to Fig. 3, gas mixer 20 of Fig. 2 is shown in a front view.

Housing 36 comprises a front plate 46 having two recesses for guiding air into housing 36. Displacement body 38 is disposed downstream of front plate 46. In the front view of gas mixer 20 shown in Fig. 3, two curved faces of displacement body 38 can be seen.

In alternate embodiments, front plate 46 may have a different quantity of recesses depending on the number of projection sections of displacement body 38 as is described in greater detail later on. For example, a front plate 46 may have one recess if displacement body 38 comprises one projection section, whereas a front plate 46 may have three recesses if displacement body 38 comprises three projection sections.

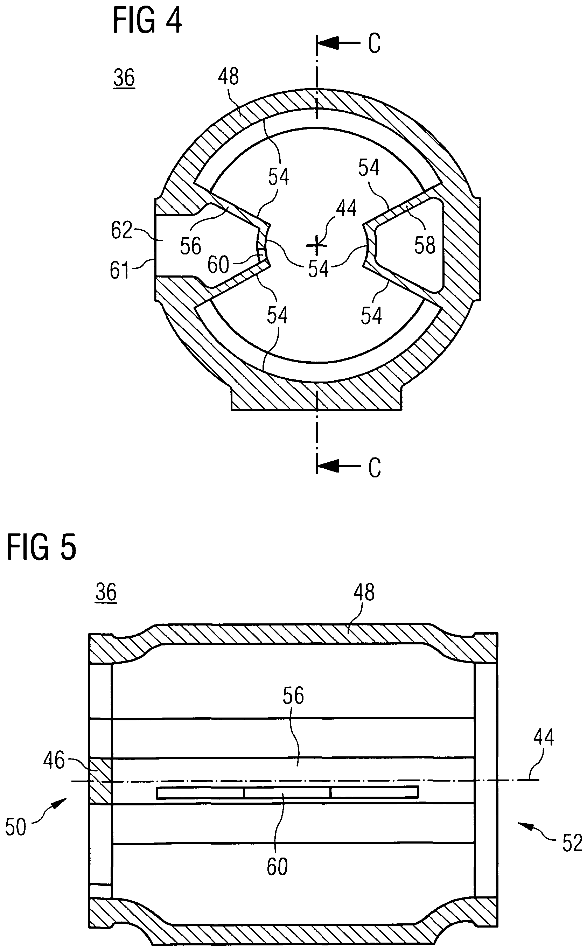

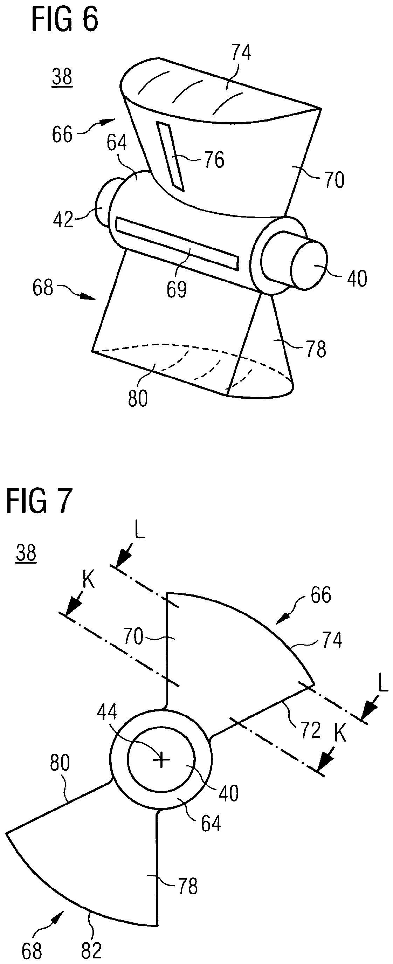

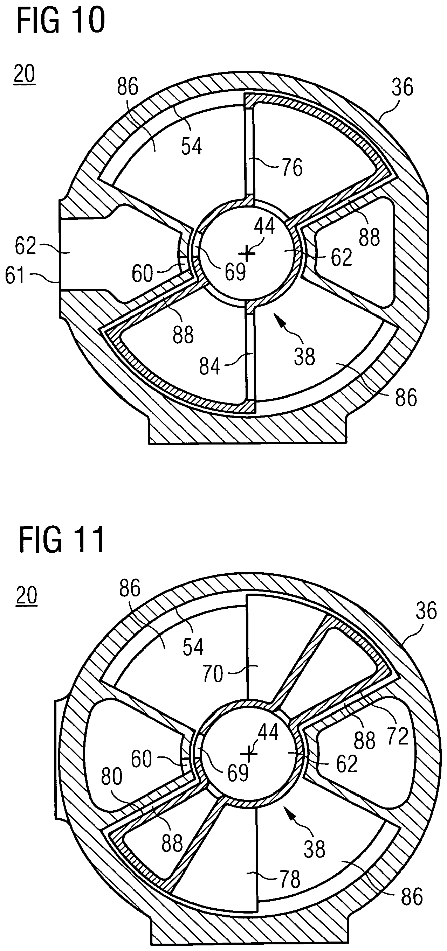

For ease of reference, housing 36 is described with reference to Figs. 4 and 5. Displacement body 38 is described with reference to Figs. 6 to 9. Gas mixer 20 comprising both housing 36 and displacement body 38 is described with reference to Figs. 10 to 11.

Referring now to Figs. 4 and 5. Fig. 4 is a sectional view of housing 36, wherein cutting plane line A-A in Fig. 2 indicates the location of the section cut. Fig. 5 is a sectional view of housing 36, wherein cutting plane line C-C in Fig. 4 indicates the location of the section cut. It is noted that in both Fig. 4 and 5 for purposes of clarity, displacement body 38 is not shown.

Housing,36 comprises guiding channel 48. Guiding channel 48 extends along central longitudinal axis 44 between an inlet 50 for intake air and an outlet 52 for air fuel mixture. Guiding channel 48 includes an inner channel wall 54. Inner channel wall 54 is cylindrically asymmetric around central longitudinal axis 44. In other words, inner channel wall 54 is not circular symmetric in the shown sectional view of Fig. 4. Instead, in the shown embodiment, inner channel wall 54 is 2-fold rotational symmetric, except the presence of gaseous fuel supply opening 60

Guiding channel 48 comprises a first projection 56 and a second projection 58. First and second projection 56, 58 extend parallel to central longitudinal axis 44 and radially inward directed to central longitudinal axis 44. Both first and second projection 56, 58 have a ring segment shaped cross section area in a plane perpendicular to central longitudinal axis 44. Outer walls of first and second projection 56, 58 define a section of inner channel wall 54. That is, first and second projection 56, 58 result in aforementioned cylindrical asymmetry of inner channel wall 54 around central longitudinal axis 44.

In alternate embodiments, guiding channel 48 may comprise another number of projections compared to the previously described guiding channel 48. Guiding channel 48 may comprise n projections from a range between 1 to n. Inner channel wall 54 of guiding channel 48 may be n-fold rotational symmetric around central longitudinal axis 44.

Housing 36 further comprises a gaseous fuel supply opening 60 disposed in projection 56. Gaseous fuel supply opening 60 is arranged parallel to central longitudinal axis 44 and has an elongate shape. Specifically, gaseous fuel supply opening 60 has a rectangular shape. Alternatively, gaseous fuel supply opening 60 may, for example, have an elliptic shape.

Gaseous fuel supply opening 60 is part of a first section of gaseous fuel passage 62. First section of gaseous fuel passage 62 is fluidly connected to fuel source 16 (see Fig. 1) via gaseous fuel inlet 61 in housing 36.

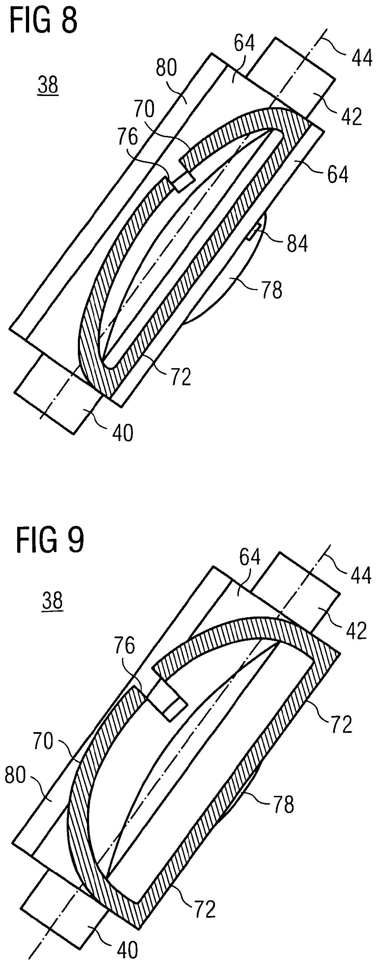

Referring now to Figs. 6 to 9. Fig. 6 is an isometric view of displacement body 38. Fig. 7 is a front view of displacement body 38. Fig. 8 is a sectional view of displacement body 38, wherein cutting plane line K-K in Fig. 7 indicates the location of the section cut. Fig. 9 is a sectional view of displacement body 38, wherein cutting plane line L-L in Fig. 7 indicates the location of the section cut.

Displacement body 38 comprises front end 40, back end 42, a central section 64, a projection section 66, and a projection section 68. Displacement body 38 is cylindrically asymmetric around central longitudinal axis 44. Due to projection section 66 and projection section 68 being opposed to projection section 66, displacement body 38 is 2-fold rotational symmetric, except the presence of gaseous fuel inlet 69.

Front end 40 and back end 42 are connected to central section 64, both front and back end 40, 42 are cylindrically shaped and adapted receive radial bearings (not shown) to enable rotational displacement of displacement body 38. Radial bearings may be housed in an annular structure being connected to housing 36 via starlike bars. Those skilled in the art will appreciate that various other solutions of mounting displacement body 38 within housing 36 while facilitating rotational displacement of displacement body 38 are known in the art and may be utilized in other embodiments.

Central section 64 is substantially cylindrically shaped. That is, central section 64 has an annularly shaped cross section area perpendicular to central longitudinal axis 44. A gaseous fuel inlet 69 is disposed in the outer circumference of central section 64 providing a passage into displacement body 38. Gaseous fuel inlet 69 is adapted to overlap gaseous fuel supply opening 60 in dependence of a rotational displacement of the displacement body 38 to vary a cross section area of the passage into displacement body 38. Gaseous fuel inlet 69 has an elongate shape in a direction parallel to central longitudinal axis 44. Specifically, gaseous fuel inlet 69 has a rectangular shape. Alternatively, gaseous fuel inlet 69 may, for example, have an elliptic shape.

Projection section 66 comprises a curved face 70, a flat face 72, an outer face 74, and a gaseous fuel outlet 76. Projection section 66 extends from central section 64 in a radial direction away from central longitudinal axis 44.

Outer face 74 has a shape adapted to a shape of an opposing section of inner channel wall 54 of guiding channel 48. Curved face 70 is a free formed surface adapted to provide a venturi constriction together with an opposing section of inner channel wall 54. As the opposing section of inner channel wall 54 is substantially flat, the venturi constriction is formed as a so-called "half venturi" shaped profile. Alternatively, the opposing section of inner channel wall 54 may be also a free formed surface adapted to provide a venturi constriction together with curved face 70.

Gaseous fuel outlet 76 is disposed in curved face 70, and has an elongated shape in a direction perpendicular to central longitudinal axis 44. Specifically, the position of gaseous fuel outlet 76 is downstream (referring to the direction of the air flow) the venturi constriction. Further, gaseous fuel outlet 76 is rectangular shaped. Alternatively, gaseous fuel outlet 76 may be, for example, elliptical shaped.

Additionally, gaseous fuel outlet 76 is fluidly connected to gaseous fuel inlet 69. Specifically, displacement body 38 is at least partially hollow to fluidly interconnect gaseous fuel outlet 76 with gaseous fuel inlet 69. Alternatively, displacement body 38 may comprise an inner gaseous fuel channel fluidly interconnecting gaseous fuel outlet 76 with gaseous fuel inlet 69.

In the shown embodiment, displacement body 38 is 2-fold rotational symmetric, projection section 68 is similar to projection section 66. That is, projection section 68 comprises corresponding curved face 78, flat face 80, outer face 82, and gaseous fuel outlet 84.

In alternate embodiments, displacement body 38 may comprise another number of projection sections compared to the above described exemplary displacement body 38. Displacement body 38 may comprise n projection sections from a range between 1 to n. Further, displacement body 38 may be n-fold rotational symmetric around central longitudinal axis 44. Alternatively, displacement body 38 may be not discrete rotationally symmetric around central longitudinal axis 44.

In alternate embodiments, a projection section may comprise more than one gaseous fuel outlet.

Referring now to Figs. 10 and 11. Fig. 10 is a sectional view of gas mixer 20, wherein cutting plane line A-A in Fig. 2 indicates the location of the section cut. Compared to Fig. 4, displacement body 38 is shown in Fig. 10. Fig. 11 is a sectional view of gas mixer 20, wherein cutting plane line B-B in Fig. 2 indicates the location of the section cut.

Displacement body 38 and inner channel wall 54 define an air passage 86 therebetween. Specifically, curved faces 70, 78 partially border air passage 86. Air passage 86 has a cross section area in a plane perpendicular to central longitudinal axis 44. A rotational displacement of displacement body 38 varies the cross section area of air passage 86.

Gaseous fuel outlet 76 of projection section 66 as well as gaseous fuel outlet 84 open into air passage 86. Gaseous fuel inlet 69, gaseous fuel outlets 76, 84, and the fluid connection therebetween together form a second section of gaseous fuel passage 62. Depending on the rotational displacement of displacement body 38, first and second section of gaseous fuel passage 62 are fluidly connected via an overlap of gaseous fuel supply opening 60 in guiding channel 48 and gaseous fuel inlet 69 in displacement body 38. That is, the overlap of gaseous fuel supply opening 60 and gaseous fuel inlet 69 defines a cross section area of gaseous fuel passage 62 passing through gaseous fuel supply opening 60 and gaseous fuel inlet 69. A rotational displacement of displacement body 38 varies the cross section area of gaseous fuel passage 62.

It is noted that rotational displacement of displacement body 38, simultaneously varies both the cross section area of air passage 86 and the cross section area of gaseous fuel passage 62. The maximum cross section area of air passage 86 is obtained in a first position as shown in Figs. 10 and 11. In this first position of displacement body 38, gaseous fuel supply opening 60 and gaseous fuel inlet 69 substantially do not overlap. The minimum cross section area of gaseous fuel passage 62 is also obtained in the first position. In other words, in the first position, the cross section area of air passage 86 is substantially opened and the cross section area of gaseous fuel passage 62 is substantially closed.

It is further noted that the minimum cross section area of air passage 86 is obtained in a second position. The second position of displacement body 38 is reached if displacement body 38 is rotated anticlockwise (referring to the situation shown in Figs. 10 and 11) to a position, where curved faces 70, 78 almost contacting an opposing section of inner channel wall 54. In this second position of displacement body 38, gaseous fuel supply opening 60 and gaseous fuel inlet 69 substantially overlap. The maximum cross section area of gaseous fuel passage 62 is obtained in the second position. In other words, in the second position, the cross section area of air passage 86 is substantially closed and the cross section area of gaseous fuel passage 62 is substantially opened.

Naturally, rotational displacement of displacement body 38 is continuously possible between the first position and the second position. That is, different ratios of the cross section area of air passage 86 and the cross section area of gaseous fuel passage 62 can be adjusted.

Further, displacement body 38 and inner channel wall 54 define a clearance volume 88 between flat faces 72, 80, central section 64, inner channel wall 54 and front plate 46 (see, for example, Fig. 3). If the cross section area of air passage 86 is decreased due to rotational displacement of displacement body 38, clearance volume 88 is increased. On the other hand, if the cross section area of air passage 86 is increased due to rotational displacement of displacement body 38, clearance volume 88 is decreased.

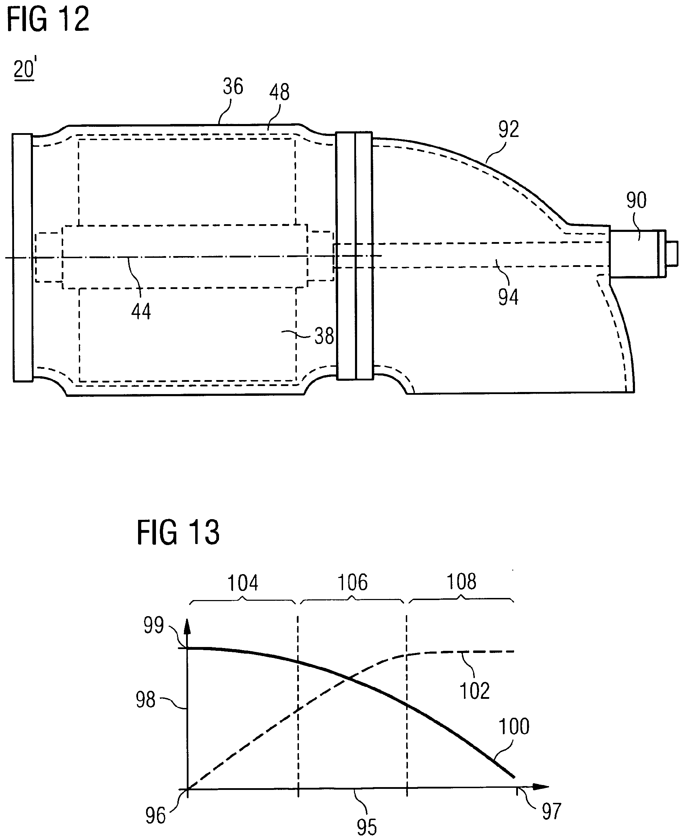

Referring to Fig. 12, a gas mixer 20' comprising an adjusting unit 90 is shown. Gas mixer 20' differs from gas mixer 20 in that gas mixer 20' comprises an adjusting unit 90.

Adjusting unit 90 is disposed outside of guiding channel 48, and mounted onto an outer wall of a line 92 being connected to guiding channel 48. Alternatively, adjusting unit 90 may be disposed within line 92, within guiding channel 48, and/or within displacement body 38.

Further, adjusting unit 90 is drivingly coupled to displacement body 38 via a connecting rod 94, and is adapted to rotationally displace displacement body 38 around central longitudinal axis 44. Rotational displacement of displacement body 38 refers to a clockwise as well as an anticlockwise rotational displacement around central longitudinal axis 44. For example, adjusting unit 90 may be a servomotor.

Still further, adjusting unit 90 may be connected to the electronic control module described in connection with Fig. 1. Depending on gaseous fuel type, and/or operating conditions of gaseous fuel internal combustion engine 1, the electronic control module may provide control information in the form of electronic signals to adjusting unit 90, causing adjusting unit 90 to rotationally displace displacement body 38 for varying the cross section areas of both air passage 86 and gaseous fuel passage 62.

In alternate embodiments, user input means may be provided to receive user input of parameters related to the desired operation of gas mixer 20 and gaseous fuel internal combustion engine 1. Those parameters may include the gaseous fuel type of the gaseous fuel in fuel source 16, and/or desired operation of gaseous fuel internal combustion engine 1. The user input means may be connected to the electronic control module.

### Industrial Applicability

In the following, operation of gaseous fuel internal combustion engine 1 in connection with operation of gas mixer 20 is explained with reference to Figs. 1 to 13.

During operation of gaseous fuel internal combustion engine 1, air from air inlet 18 enters gas mixer 20 at inlet 50 through recesses in front plate 46. Gaseous fuel from fuel source 16 enters gas mixer 20 through gaseous fuel inlet 61. The gaseous fuel is mixed into passing air when entering air passage 86 through gaseous fuel outlets 76, 84 of displacement body 38. The air fuel mixture leaves gas mixer 20 through outlet 52 and is guided to intake manifold 22.

Depending on the rotational displacement of displacement body 38, air flow and gaseous fuel flow can be adjusted by the above described adjustment of the cross section area of air passage 86 and the cross section area of gaseous fuel passage 62. Rotational displacement of displacement body 38 is caused by adjusting unit 90.

Turning to Fig. 13, an exemplary adjustment of both the cross section area of air passage 86 and the cross section area of gaseous fuel passage 62 is described in the following.

The axis of abscissa 95 indicates the rotational displacement of displacement body 38 between the first position in point of origin 96 and the second position 97. The axis of ordinate 98 indicates a cross section area between a substantially closed state in the point of origin 96 and a substantially opened state at reference numeral 99.

Graph 100 indicates the cross section area of air passage 86 in dependence of the rotational displacement of displacement body 38, whereas graph 102 indicates the cross section area of gaseous fuel passage 62 in dependence of the rotational displacement of displacement body 38.

Depending on the rotational displacement of displacement body 38, the AFR is set as the rotational displacement affects the cross section areas of air passage 86 and gaseous fuel passage 62.

Furthermore, in Fig. 13, three exemplary operational ranges of rotational displacements and corresponding AFRs are indicated. First range 104 indicates a practicable operating range of gaseous fuel internal combustion engine 1 for gaseous fuels having high calorific values such as propane. Second range 106 indicates a practicable operating range for gaseous fuels having medium calorific values such as natural gas, and third range 108 indicates a practicable operating range for gaseous fuels having low calorific values such as lean gas.

Accordingly, the same displacement body 38 within gas mixer 20 is capable to provide a wide range of AFRs for numerous gaseous fuel types. Consequently, costly and laborious change of displacement bodies when changing to another gaseous fuel type with a different calorific value can be saved.

In a simple way, both the cross section areas of air passage 86 and gaseous fuel passage 62 can be directly adjusted by a sole adjusting unit 90.

Additionally, during operation of gaseous fuel engine 1, a pressure drop across air passage 82 may be minimized by adjustment of a rotational displacement of displacement body 38. A minimized pressure drop across air passage 82 may increase efficiency of gaseous fuel engine 1.

Those skilled in the art will appreciate that numerous embodiments of exemplary disclosed gas mixer 20 exist, in which both an inner channel wall 54 and a displacement body 38 may be cylindrically asymmetric around a central longitudinal axis 44, and may be adapted to each other to form an air passage 86 having an adjustable cross section area in a plane perpendicular to the central longitudinal axis 44 by rotational displacement of displacement body 38. Additionally, displacement body 38 and inner channel wall 54 may be adapted to each other to form a gaseous fuel passage 62 having an adjustable cross section area by rotational displacement of displacement body 38.

As used herein, the term "cylindrically asymmetric" around an axis means that in a three dimensional space a "cylindrically asymmetric" body is not continuously rotationally symmetric around the related axis. However, a "cylindrically asymmetric" body can be discrete rotationally symmetric in the three dimensional space around the same axis.

Although the preferred embodiments of this invention have been described herein, improvements and modifications may be incorporated without departing from the scope of the following claims.

## Claims

1. A gas mixer (20) for a gaseous fuel internal combustion engine (1) for mixing gaseous fuel and air, comprising:
a guiding channel (48) extending along a central longitudinal axis (44) between an inlet (50) for air inlet and an outlet (52) for air fuel mixture, the guiding channel (48) comprising a gaseous fuel supply opening (60) and an inner channel wall (54) being n-fold rational symmetric around the central longitudinal axis (44), except for the presence of the gaseous fuel supply opening (60); and
a displacement body (38) comprising a gaseous fuel inlet (69) and gaseous fuel outlets (76, 84) and arranged within the guiding channel (48), the displacement body (38) being n-fold rotational symmetric and rotationally displaceable around the central longitudinal axis (44), except for the presence of the gaseous fuel inlet (69),
wherein n is an integer greater than 1, and
wherein the displacement body (38) and the inner channel wall (54) define an air passage (86) therebetween, the air passage (86) having a cross section area in a plane perpendicular to the central longitudinal axis (44), and a rotational displacement of the displacement body (38) varies the cross section area of the air passage (86).

2. The gas mixer (20) of claim 1, wherein
the gaseous fuel inlet (69) is adapted to overlap the gaseous fuel supply opening (60) in dependence of a rotational displacement of the displacement body (38)

3. The gas mixer (20) of claim 2, wherein the overlap of the gaseous fuel supply opening (60) and the gaseous fuel inlet (69) defines a cross section area of a gaseous fuel passage (62) passing through the gaseous fuel supply opening (60) and the gaseous fuel inlet (69), and a rotational displacement of the displacement body (38) varies the cross section area of the gaseous fuel passage (62).

4. The gas mixer (20) of claim 2 or 3, wherein the guiding channel comprises a projection (56) extending radially inward, and the gaseous fuel supply opening (60) is disposed in the projection (56); and/or
the displacement body (38) comprises a central section (64), and the gaseous fuel inlet (69) is disposed in the central section (64).

5. The gas mixer (20) of claim 4, wherein the projection (56) has a ring segment shaped cross section area in a plane perpendicular to the central longitudinal axis (44); and/or
the central section (64) has an annularly shaped cross section area perpendicular to the central longitudinal axis (44).

6. The gas mixer (20) of any one of claims 2 to 5, wherein the displacement body (38) comprises a gaseous fuel outlet (76, 84) fluidly connected to the gaseous fuel inlet (69) of the displacement body (38), the gaseous fuel outlet (76,84) opening into the air passage (86).

7. The gas mixer (20) of claim 6, wherein the displacement body (38) is at least partially hollow to fluidly interconnect the gaseous fuel inlet (69) with the gaseous fuel outlet (76,84).

8. The gas mixer (20) of any one of claims 4 to 7, wherein the displacement body (38) further comprises a projection section (66, 68) extending from the central section (64) in a radial direction away from the central longitudinal axis (44), and the gaseous fuel outlet (76, 84) is disposed in the projection section (66, 68).

9. The gas mixer (20) of claim 8, wherein the projection section (66, 68) comprises a curved face (70, 78) partially bordering the air passage (86), and the gaseous fuel outlet (76, 84) is disposed in the curved face (70, 78).

10. The gas mixer (20) of any one of claims 2 to 9, wherein the gaseous fuel supply opening (60) has an elongate shape in a direction parallel to the central longitudinal axis (44), and/or
the gaseous fuel inlet (69) of the displacement body (38) has an elongate shape in a direction parallel to the central longitudinal axis (44), and/or
the gaseous fuel outlet (76, 84) of the displacement body (38) has an elongate shape in a direction perpendicular to the central longitudinal axis (44).

11. The gas mixer (20) of any one of claims 1 to 10, wherein a rotational displacement of the displacement body (38) is continuously possible between a first position and a second position;
wherein in the first position, a cross section area of an air passage (86) is substantially opened and a cross section area of a gaseous fuel passage (62) is substantially closed; and
in the second position, the cross section area of the air passage (86) is substantially closed and the cross section area of the gaseous fuel passage (62) is substantially opened.

12. The gas mixer (20) of any one of claims 1 to 11, further comprising an adjusting unit (90) drivingly coupled to the displacement body (38), the adjusting unit (90) being adapted to rotationally displace the displacement body (38) around the central longitudinal axis (44).

13. The gas mixer (20) of claim 12, wherein the adjusting unit (90) is a servomotor, and/or
the adjusting unit (90) is disposed outside the guiding channel (48), within the guiding channel (48), and/or within the displacement body (38).

14. A gaseous fuel internal combustion engine (1),
comprising: an air inlet (18) for supplying intake air;
a fuel source (16) for supplying gaseous fuel; and
a gas mixer (20) of any one of the preceding claims, the gas mixer (20) being fluidly connected to the air inlet (18) and the fuel source (16), wherein the gas mixer (20) is configured to provide a mixture of gaseous fuel and air having a predetermined air fuel ratio.

## Patentansprüche

1. Gasmischer (20) für einen Verbrennungsmotor für gasförmigen Brennstoff (1) zum Mischen von gasförmigem Brennstoff und Luft, umfassend:
einen Führungskanal (48), der sich entlang einer zentralen Längsachse (44) zwischen einem Einlass (50) für einen Lufteinlass und einem Auslass (52) für eine Luft-Brennstoffmischung erstreckt, wobei der Führungskanal (48) eine Zufuhröffnung (60) für einen gasförmigen Brennstoff und eine innere Kanalwand (54) umfasst, die n-fach rotationssymmetrisch um die zentrale Längsachse (44) mit Ausnahme der Anwesenheit der Zufuhröffnung (60) für den gasförmigen Brennstoff führt; und
einen Verdränger (38), umfassend einen Einlass (69) für einen gasförmigen Brennstoff und Auslässe (76, 84) für einen gasförmigen Brennstoff, und die innerhalb des Führungskanals (48) angeordnet sind, wobei der Verdränger (38) n-fach rotationssymmetrisch und rotationsverdrängt um die zentrale Längsachse (44) mit Ausnahme der Anwesenheit des Einlasses (69) für den gasförmigen Brennstoff führt,
wobei n eine Ganzzahl von mehr als 1 ist, und
wobei der Verdränger (38) und die innere Kanalwand (54) zwischen diesen einen Luftdurchgang (86) definieren, wobei der Luftdurchgang (86) einen Querschnittsbereich in einer Ebene aufweist, die senkrecht zu der zentralen Längsachse (44) verläuft, und eine Rotationsverdrängung des Verdrängers (38) den Querschnittsbereich des Luftdurchgangs (86) variiert.

2. Gasmischer (20) nach Anspruch 1, wobei
der Einlass (69) für einen gasförmigen Brennstoff angepasst ist, um die Zufuhröffnung (60) für den gasförmigen Brennstoff als Funktion einer Rotationsverdrängung des Verdrängers (38) zu überlappen.

3. Gasmischer (20) nach Anspruch 2, wobei das Überlappen der Zufuhröffnung (60) für den gasförmigen Brennstoff und des Einlasses (69) für den gasförmigen Brennstoff einen Querschnittsbereich eines Durchgangs (62) für einen gasförmigen Brennstoff, der durch die Zufuhröffnung (60) für den gasförmigen Brennstoff und den Einlass (69) für den gasförmigen Brennstoff hindurchführt, definiert, und eine Rotationsverdrängung des Verdrängers (38) den Querschnittsbereich des Durchgangs (62) für den gasförmigen Brennstoff variiert.

4. Gasmischer (20) nach Anspruch 2 oder 3, wobei der Führungskanal einen Vorsprung (56) umfasst, der sich radial nach innen erstreckt und die Zufuhröffnung (60) für den gasförmigen Brennstoff in dem Vorsprung (56) angeordnet ist; und/oder
der Verdränger (38) einen zentralen Abschnitt (64) umfasst und der Einlass (69) für den gasförmigen Brennstoff in dem zentralen Abschnitt (64) angeordnet ist.

5. Gasmischer (20) nach Anspruch 4, wobei der Vorsprung (56) einen ringsegmentförmigen Querschnittsbereich in einer Ebene senkrecht zu der zentralen Längsachse (44) aufweist; und/oder
der zentrale Abschnitt (64) einen ringförmigen Querschnittsbereich senkrecht zu der zentralen Längsachse (44) aufweist.

6. Gasmischer (20) nach einem der Ansprüche 2 bis 5, wobei der Verdränger (38) einen Auslass (76,84) für einen gasförmigen Brennstoff umfasst, der mit dem Einlass (69) für den gasförmigen Brennstoff des Verdrängers (38) flüssig verbunden ist, wobei sich der Auslass (76, 84) für den gasförmigen Brennstoff in den Luftdurchgang (86) öffnet.

7. Gasmischer (20) nach Anspruch 6, wobei der Verdränger (38) wenigstens teilweise hohl ist, um den Einlass (69) für den gasförmigen Brennstoff mit dem Auslass (76, 84) für den gasförmigen Brennstoff flüssig zu verbinden.

8. Gasmischer (20) nach einem der Ansprüche 4 bis 7, wobei der Verdränger (38) weiter einen Vorsprungsabschnitt (66, 68) umfasst, der sich von dem zentralen Abschnitt (64) in einer radialen Richtung von der zentralen Längsachse (44) weg erstreckt, und der Auslass (76, 84) für den gasförmigen Brennstoff in dem Vorsprungsabschnitt (66, 68) angeordnet ist.

9. Gasmischer (20) nach Anspruch 8, wobei der Vorsprungsabschnitt (66, 68) eine gebogene Fläche (70, 78) umfasst, die teilweise an den Luftdurchgang (86) angrenzt, und der Auslass (76, 84) für den gasförmigen Brennstoff in der gebogenen Fläche (70, 78) angeordnet ist.

10. Gasmischer (20) nach einem der Ansprüche 2 bis 9, wobei die Zufuhröffnung (60) für den gasförmigen Brennstoff eine langgestreckte Form in einer Richtung parallel zu der zentralen Längsachse (44) aufweist, und/oder
der Einlass (69) für den gasförmigen Brennstoff des Verdrängers (38) eine langgestreckte Form in einer Richtung parallel zu der zentralen Längsachse (44) aufweist, und/oder
der Auslass (76, 84) für den gasförmigen Brennstoff des Verdrängers (38) eine langgestreckte Form in einer Richtung senkrecht zu der zentralen Längsachse (44) aufweist.

11. Gasmischer (20) nach einem der Ansprüche 1 bis 10, wobei eine Rotationsverdrängung des Verdrängers (38) zwischen einer ersten Position und einer zweiten Position kontinuierlich möglich ist;
wobei in der ersten Position ein Querschnittsbereich eines Luftdurchgangs (86) im Wesentlichen geöffnet ist, und ein Querschnittsbereich eines Durchgangs (62) für einen gasförmigen Brennstoff im Wesentlichen geschlossen ist; und
in der zweiten Position der Querschnittsbereich des Luftdurchgangs (86) im Wesentlichen geschlossen ist, und der Querschnittsbereich des Durchgangs (62) für den gasförmigen Brennstoff im Wesentlichen geöffnet ist.

12. Gasmischer (20) nach einem der Ansprüche 1 bis 11, weiter umfassend eine Verstelleinheit (90), die antreibend an den Verdränger (38) gekoppelt ist, wobei die Verstelleinheit (90) angepasst ist, um den Verdränger (38) um die zentrale Längsachse (44) drehend zu verdrängen.

13. Gasmischer (20) nach Anspruch 12, wobei die Verstelleinheit (90) ein Servomotor ist, und/oder
die Verstelleinheit (90) außerhalb des Führungskanals (48), innerhalb des Führungskanals (48), und/oder innerhalb des Verdrängers (38) angeordnet ist.

14. Verbrennungsmotor für gasförmigen Brennstoff (1), umfassend: einen Lufteinlass (18) für die Zufuhr von Ansaugluft;
eine Brennstoffquelle (16) für die Zufuhr eines gasförmigen Brennstoffs; und
einen Gasmischer (20) nach einem der vorstehenden Ansprüche, wobei der Gasmischer (20) mit dem Lufteinlass (18) und der Brennstoffquelle (16) flüssig verbunden ist, wobei der Gasmischer (20) konfiguriert ist, eine Mischung aus gasförmigem Brennstoff und Luft, die ein vorbestimmtes Luft-/Brennstoffverhältnis aufweist, bereitzustellen.

## Revendications

1. Mélangeur de gaz (20) pour moteur à combustion interne de carburant gazeux (1) pour mélanger du carburant gazeux et de l'air, comprenant :
un canal de guidage (48) s'étendant le long d'un axe longitudinal central (44) entre une entrée (50) pour l'entrée d'air et une sortie (52) pour le mélange air-carburant, le canal de guidage (48) comprenant une ouverture d'alimentation en carburant gazeux (60) et une paroi de canal interne (54) présentant une symétrie en rotation d'ordre n autour de l'axe longitudinal central (44), exception faite de la présence de l'ouverture d'alimentation en carburant gazeux (60) ; et
un corps à déplacement (38) comprenant une entrée de carburant gazeux (69) et des sorties de carburant gazeux (76, 84) et agencé à l'intérieur du canal de guidage (48), le corps à déplacement (38) présentant une symétrie en rotation d'ordre n et étant déplaçable en rotation autour de l'axe longitudinal central (44), exception faite de la présence de l'entrée de carburant gazeux (69),
dans lequel n est un entier supérieur à 1, et
dans lequel le corps à déplacement (38) et la paroi de canal interne (54) définissent un passage d'air (86) entre eux, le passage d'air (86) ayant une zone en coupe dans un plan perpendiculaire à l'axe longitudinal central (44), et un déplacement en rotation du corps à déplacement (38) modifie la zone en coupe du passage d'air (86).

2. Mélangeur de gaz (20) selon la revendication 1, dans lequel
l'entrée de carburant gazeux (69) est adaptée pour chevaucher l'ouverture d'alimentation en carburant gazeux (60) en fonction d'un déplacement en rotation du corps à déplacement (38).

3. Mélangeur de gaz (20) selon la revendication 2, dans lequel le chevauchement de l'ouverture d'alimentation en carburant gazeux (60) et de l'entrée de carburant gazeux (69) définit une zone en coupe d'un passage de carburant gazeux (62) passant à travers l'ouverture d'alimentation en carburant gazeux (60) et l'entrée de carburant gazeux (69), et un déplacement en rotation du corps à déplacement (38) modifie la zone en coupe du passage de carburant gazeux (62).

4. Mélangeur de gaze (20) selon la revendication 2 ou 3, dans lequel le canal de guidage comprend une projection (56) s'étendant radialement vers l'intérieur, et l'ouverture d'alimentation en carburant gazeux (60) est disposée dans la projection (56) ; et/ou
le corps à déplacement (38) comprend une section centrale (64), et l'entrée de carburant gazeux (69) est disposée dans la section centrale (64).

5. Mélangeur de gaz (20) selon la revendication 4, dans lequel la projection (56) possède une zone en coupe en forme de segment circulaire dans un plan perpendiculaire à l'axe longitudinal central (44) ; et/ou
la section centrale (64) a une zone en coupe de forme annulaire perpendiculaire à l'axe longitudinal central (44).

6. Mélangeur de gaz (20) selon l'une quelconque des revendications 2 à 5, dans lequel le corps à déplacement (38) comprend une sortie de carburant gazeux (76, 84) raccordée fluidiquement à l'entrée de carburant gazeux (69) du corps à déplacement (38), la sortie de carburant gazeux (76, 84) s'ouvrant dans le passage d'air (86).

7. Mélangeur de gaz (20) selon la revendication 6, dans lequel le corps à déplacement (38) est au moins partiellement creux pour raccorder fluidiquement entre elles l'entrée de carburant gazeux (69) et la sortie de carburant gazeux (76, 84).

8. Mélangeur de gaz (20) selon l'une quelconque des revendications 4 à 7, dans lequel le corps à déplacement (38) comprend en outre une section de projection (66, 68) s'étendant à partir de la section centrale (64) dans une direction radiale s'écartant de l'axe longitudinal central (44), et la sortie de carburant gazeux (76, 84) est disposée dans la section de projection (66, 68).

9. Mélangeur de gaz (20) selon la revendication 8, dans lequel la section de projection (66, 68) comprend une face incurvée (70, 78) délimitant partiellement le passage d'air (86), et la sortie de carburant gazeux (76, 84) est disposée dans la face incurvée (70, 78).

10. Mélangeur de gaz (20) selon l'une quelconque des revendications 2 à 9, dans lequel l'ouverture d'alimentation en carburant gazeux (60) a une forme allongée dans une direction parallèle à l'axe longitudinal central (44), et/ou
l'entrée de carburant gazeux (69) du corps à déplacement (38) a une forme allongée dans une direction parallèle à l'axe longitudinal central (44), et/ou
la sortie de carburant gazeux (76, 84) du corps à déplacement (38) a une forme allongée dans une direction perpendiculaire à l'axe longitudinal central (44).

11. Mélangeur de gaz (20) selon l'une quelconque des revendications 1 à 10, dans lequel un déplacement en rotation du corps à déplacement (38) est possible en continu entre une première position et une seconde position ;
dans lequel dans la première position, une zone en coupe d'un passage d'air (86) est sensiblement ouverte et une zone en coupe d'un passage de carburant gazeux (62) est sensiblement fermée ; et
dans la seconde position, la zone en coupe du passage d'air (86) est sensiblement fermée et la zone en coupe du passage de carburant gazeux (62) est sensiblement ouverte.

12. Mélangeur de gaz (20) selon l'une quelconque des revendications 1 à 11, comprenant en outre une unité d'ajustement (90) couplée par entraînement au corps à déplacement (38), l'unité d'ajustement (90) étant adaptée pour déplacer en rotation le corps à déplacement (38) autour de l'axe longitudinal central (44).

13. Mélangeur de gaz (20) selon la revendication 12, dans lequel l'unité d'ajustement (90) est un servomoteur, et/ou
l'unité d'ajustement (90) est disposée à l'extérieur du canal de guidage (48), à l'intérieur du canal de guidage (48) et/ou à l'intérieur du corps à déplacement (38).

14. Moteur à combustion interne à carburant gazeux (1), comprenant :
une entrée d'air (18) pour assurer l'alimentation en air d'admission ;
une source de carburant (16) pour assurer l'alimentation en carburant gazeux ; et
un mélangeur de gaz (20) selon l'une quelconque des revendications précédentes, le mélangeur de gaz (20) étant raccordé fluidiquement à l'entrée d'air (18) et à la source de carburant (16), dans lequel le mélangeur de gaz (20) est configuré pour fournir un mélange de carburant gazeux et d'air ayant un rapport air-carburant prédéterminé.
